(19) Europäisches Patentamt
European Patent Office
Office européen des brevets

(11) **EP 2 930 610 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
**G06F 7/58** (2006.01) **H04L 9/08** (2006.01)

(21) Anmeldenummer: **15154590.2**

(22) Anmeldetag: **11.02.2015**

(54) **Zufallszahlengenerator und Verfahren zum Erzeugen von Zufallszahlen**

Random number generator and method for generating random numbers

Générateur de nombres aléatoires et procédé de génération de nombres aléatoires

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014 DE 102014206992**

(43) Veröffentlichungstag der Anmeldung:
**14.10.2015 Patentblatt 2015/42**

(73) Patentinhaber: **Siemens Aktiengesellschaft 80333 München (DE)**

(72) Erfinder:
  • **Falk, Rainer 85586 Poing (DE)**
  • **Fries, Steffen 85598 Baldham (DE)**

(56) Entgegenhaltungen:
**US-A1- 2013 124 591    US-A1- 2013 212 140**

  • **Tilo Müller ET AL: "Self-Encrypting Disks pose Self-Decrypting Risks", , 1. Dezember 2012 (2012-12-01), XP055211962, Gefunden im Internet: URL:https://www1.informatik.uni-erlangen.d e/filepool/projects/sed/seds-at-risks.pdf [gefunden am 2015-09-08]**
  • **"M500 2.5-Inch SATA NAND Flash SSD", Micron Data Sheets, 1. Januar 2013 (2013-01-01), XP055211971, Gefunden im Internet: URL:https://www.micron.com/~/media/documen ts/products/data-sheet/ssd/m500_2_5_ssd.pd f [gefunden am 2015-09-08]**

EP 2 930 610 B1

**Beschreibung**

Die vorliegende Erfindung betrifft einen Zufallszahlengenerator zum Erzeugen von Zufallszahlen mittels eines Solid-State-Speichers. Des Weiteren betrifft die vorliegende Erfindung ein Verfahren zum Erzeugen von Zufallszahlen mittels eines Solid-State-Speichers.

Zufallszahlen bilden eine Grundlage in der Kryptographie insbesondere bei der Schlüsselverwaltung (Key Management) für Sicherheitsdienste wie den Integritätsschutz und die Verschlüsselung von Daten. Zufallszahlen werden insbesondere benötigt, um einen kryptographischen Schlüssel zu erzeugen oder um eine Nonce zu ermitteln. Zufallszahlen können über logische oder physikalische Zufallszahlengeneratoren erzeugt werden. Starke, d.h. besonders zufällig gewählte, Zufallszahlen werden oft durch oder unter Verwendung eines physikalischen Zufallszahlengenerators erzeugt. Dabei kann ein Pseudozufallszahlengenerator mit einem Startwert initialisiert werden, der mittels eines physikalischen Zufallszahlengenerators ermittelt wurde.

Es sind allgemein Zufallszahlengeneratoren bekannt, siehe beispielsweise http://de.wikipedia.org/wiki/Zufallszahlengenerator. Es gibt physikalische Zufallszahlengeneratoren, die basierend auf einem physikalischen Effekt eine Zufallszahl ermitteln. Es sind weiterhin Pseudozufallszahlengeneratoren bekannt, die ausgehend von einem Startwert über eine deterministische Berechnungsfunktion eine Folge von Pseudozufallszahlen ermitteln. Diese weisen von Zufallszahlen erwartete statistische Eigenschaften auf. Es sind deterministische kryptographische Zufallszahlengeneratoren vorgesehen, die ebenfalls deterministisch ausgehend von einem Startwert eine Zufallszahlenfolge berechnen. Die Zufallszahlen weisen besondere Eigenschaften auf, die für die Verwendung in kryptographischen Protokollen erforderlich sind, siehe unter anderem http://de.wikipedia.org/wiki/Kryptographisch_sicherer_Zufalls zahlengenerator. Üblicherweise wird zumindest der Startwert dabei mittels eines physikalischen Zufallszahlengenerators ermittelt.

Einen Überblick über Hardware-basierte Zufallszahlengeneratoren gibt beispielsweise http://en.wikipedia.org/wiki/Hardware_random_number_generator

Weitere Zufallszahlengeneratoren sind beispielsweise in US 2013/0124591 A1 oder US 2013/0124591 A1 offenbart.

Ein Hardware-Zufallszahlengenerator ist beispielsweise auf Intel CPUs realisiert (siehe http://software.intel.com/en-us/articles/intel-digital-random-number-generator-drng-softwareimplementation-guide). Hierbei greifen mehrere Rechenkerne (Cores) auf denselben Zufallszahlengenerator zu.

Um Zufallszahlen zu erzeugen, können physikalische Effekte wie Rauschen von Halbleiterbauelementen als Quelle für Zufallszahlen genutzt werden. Aus "Flash Memory for Ubiquitous Hardware Security Functions: True Random Number Generation and Device Fingerprints" (siehe http://tsg.ece.cornell.edu/lib/exe/fetch.php?media=pubs:flash-ieeesp2012.pdf) ist es bekannt, einen Flash-Speicher zur Erzeugung von Zufallszahlen zu nutzen. Hierbei wird das Generations-Rekombinations-Rauschen (Telegraphenrauschen, RTN) und thermisches Rauschen in Halbleiterbausteinen genutzt. Dabei werden Speicherzellen gelöscht und danach mehrfach partiell beschrieben. Für Speicherbereiche kann dann durch Auslesen ein von physikalischen Effekten abhängiger Parameter bestimmt werden.

Aus http://downloads.hindawi.com/journals/es/2009/598246.pdf) ist es bekannt, eine Initialisierung eines Zufallszahlengenerators (random number generator, RNG) während des Systemstarts oder auch während der Laufzeit basierend auf physikalischen Effekten durchzuführen. Hier wird z.B. ausgenutzt, dass das Zeitverhalten beim Starten eine Festplatte nicht immer genau gleich ist. Dieses ist über einen High-Speed-Counter bestimmbar. Diese Variationen werden genutzt, um einen Pool an Zufallszahlen zu erzeugen.

Eine andere Quelle, die genutzt wird, ist z.B. der Tracking-Fehler, der die Abweichung der Position des Lesekopfes vom optimalen Datenpfad auf der Festplatte beim Lesen ist. US 2009/0161246 A1 offenbart die Erzeugung einer Zufallszahl unter Verwendung einer Auswertung der Lesekopfposition.

WO 2012/136763 A2 offenbart, dass für Startwerte (Seeds) zur Initialisierung eines Pseudozufallszahlengenerators der Speicherzustand (Memory State) eines Teils des zufälligen Inhalts eines Flash-Speichers genutzt werden kann. Der Zufallszahlengenerator erzeugt damit Zufallszahlen, die wiederum genutzt werden, den entsprechenden Speicherbereich zu überschreiben und damit als neue Quelle für Seeds genutzt werden können.

Aus http://www.chronox.de/jent/doc/CPU-Jitter-NPTRNG.html ist es bekannt, dass für Festplatten die zeitlichen Varianzen bei Lese-/Schreibzugriffen ausgenutzt werden.

Aus http://www.contradata.it/cataloghi/InnoDisk_Error_Correction Detection and Bad Block Management White Paper.pdf ist es bekannt, ein Bad-Block-Management von Solid-State-Disks (SSDs) durchzuführen, bei dem fehlerhafte Blöcke markiert und damit nicht mehr zum Speichern von Informationen genutzt werden. Eine Optimierung von verfügbaren Speicherbereichen auf SSDs kann beispielsweise durch eine Gruppierung basierend auf Abnutzungsgraden der Speicherbereiche durchgeführt werden (siehe beispielsweise http://en.wikipedia.org/wiki/Wear_leveling).

Vor diesem Hintergrund besteht eine Aufgabe der vorliegenden Erfindung darin, die Erzeugung von starken Zufallszahlen basierend auf einer physikalischen Quelle auf einfache Weise zu ermöglichen.

Demgemäß wird ein Zufallszahlengenerator zum Erzeugen von Zufallszahlen mittels eines Solid-State-Speichers vorgeschlagen. Der Zufallszahlengenerator weist eine Ermittlungseinheit zum Ermitteln von Verwaltungsdaten, die in dem Solid-State-Speicher zur Verwaltung des Solid-State-Speichers während des Betriebs gespeichert werden, eine Recheneinheit zum Berechnen eines Startwerts basierend auf den ermittelten Verwaltungsdaten, und eine Erzeugungseinheit zum Erzeugen einer Zufallszahl basierend auf dem berechneten Startwert auf.

Die jeweilige Einheit, zum Beispiel Recheneinheit oder Erzeugungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Idee des vorgeschlagenen Zufallszahlengenerators beruht darauf, auf einfache Weise Zufallszahlen für Systeme, die einen Solid-State-Speicher benutzen, bereitzustellen. Dabei werden bereits vorhandene Informationen aus dem Speichermanagement des Solid-State-Speichers genutzt und keine zusätzlichen Informationen erzeugt. Abweichungen zwischen verschiedenen Solid-State-Speichern liegen dabei in physikalisch bedingten Fertigungstoleranzen und dem damit initialen Status einer Speicherverwaltung und der unterschiedlichen Nutzung, die damit zu unterschiedlichen Belastungsdaten, d.h. Daten, die mit der Nutzung zusammenhängen, wie z.B. die Anzahl der Lese-/Schreibzugriffe, und somit unterschiedlichen Verwaltungsdaten führen. Auf diese Weise ist die Zufälligkeit auch für Solid-State-Speicher gleicher Art gegeben. Die Verwaltungsdaten können bei der Herstellung erzeugt werden, z.B. um defekte Speicherzellen zu markieren, und/oder sie können während der Nutzung angelegt und/oder aktualisiert werden, z.B. um während der Nutzung defekt gewordene Speicherzellen zu markieren, oder um eine nutzungsabhängige Information von Speicherzellen zu aktualisieren.

Zur Erzeugung von Zufallszahlen mittels des Solid-State-Speichers werden die Verwaltungsdaten, die von dem Solid-State-Speicher während der Lebenszeit des Solid-State-Speichers, also bei der Herstellung und/oder während des Betriebs, erzeugt werden, genutzt. Aus den Verwaltungsdaten, die für den Umgang mit physikalischen Einschränkungen und Defekten des physikalischen Speichers erforderlich sind, wird zunächst ein Startwert bzw. ein Initialisierungswert für eine deterministische Zufallszahlenerzeugungseinheit, im folgenden Erzeugungseinheit genannt, ermittelt, die anschließend eine Zufallszahl erzeugt. Dies hat den Vorteil, dass beispielsweise nicht spezifisch vorhersagbare physikalische Defekte einzelner Speicherzellen als physikalische Entropie, d.h. Zufälligkeit, eingehen. Darüber hinaus können auch nutzungsabhängige Effekte eingehen, sodass z.B. nach wiederholtem Systemstart unterschiedliche Zufallsdaten bereitgestellt werden, selbst wenn keine neuen physikalischen Defekte zwischenzeitlich aufgetreten sind. Hier wird der Umstand, dass Speicherzellen bereits defekt sein können bzw. bei Nutzung einen Defekt entwickeln, als Effekt für die physikalische Erzeugung von Zufallszahlen verwendet. Die Tatsache, dass spezielle Informationen ohnehin erfasst und abgelegt werden, um mit defekten Speicherzellen umzugehen bzw. um eine gleichmäßige Nutzung des Solid-State-Speichers und damit von Speicherzellen zu gewährleisten und eine übermäßige, unzulässige Beanspruchung von Speicherzellen zu vermeiden, wird hierbei genutzt, um mit einem geringen Zusatzaufwand eine Information für die Bestimmung einer physikalischen Zufallszahl zu bestimmen.

Unter einem Solid-State-Speicher wird in diesem Zusammenhang beispielsweise ein elektronisches Speichermedium, das durch Halbleiterbausteine realisiert ist, verstanden. Der Solid-State-Speicher ist ein nichtflüchtiger Speicher.

Gemäß einer Ausführungsform ist die Recheneinheit dazu eingerichtet, die Erzeugungseinheit basierend auf dem berechneten Startwert zu initialisieren. Dazu können die Verwaltungsdaten beispielsweise direkt verwendet werden oder es kann ein Hashwert der Verwaltungsdaten verwendet werden.

In dieser Ausführungsform wird der Startwert als Initialisierungswert verwendet. Basierend auf diesem wird die Erzeugungseinheit initialisiert, d.h. dass die Erzeugungseinheit diesen Wert verwendet, um ihre Berechnung zur Erzeugung einer Zufallszahl durchzuführen.

Gemäß einer weiteren Ausführungsform weisen die Verwaltungsdaten Informationen in Bezug auf Speicherbereiche des Solid-State-Speichers auf.

Die Informationen können sich auf den aktuellen Zustand (sogenannte Health Parameter) der einzelnen Speicherzellen bzw. Speicherbereiche des Solid-State-Speichers sowie Tabellen, die angeben, welche physikalischen Speicherzellen nicht mehr nutzbar sind, beziehen.

Gemäß einer weiteren Ausführungsform weisen die Informationen einen Abnutzungsgrad, einen Zähler von Lese- und/oder Schreibzugriffen, und/oder Informationen über eine Verschiebung von logischen Speicherblöcken auf physikalische Speicherblöcke auf.

Da ein Solid-State-Speicher relativ unzuverlässige Speicherzellen mit begrenzter Schreibzyklenzahl verwendet, können Abnutzungsgrad-Algorithmen, sogenannte Wear-Leveling-Algorithmen, eingesetzt werden, um zum einen eine gleichmäßige Belastung der Speicherzellen durch Schreibzugriffe zu erreichen und um zum anderen defekte Speicherzellen bzw. Speicherbereiche für eine weitere Nutzung auszuschließen. Es ist dabei möglich, dass bereits bei der Herstellung einzelne Speicherzellen defekt sind. Der Solid-State-Speicher kann dabei ein Speichermanagement durchführen, das neben der von üblichen Dateisystemen bekannten reinen Speicherverwaltung, d.h. welche Daten sind wo gespeichert, auch Informationen aus Selbsttests sammelt und Daten bezüglich der Speicherzellenqualität enthält. Diese Informationen bzw. Daten beziehen sich beispielsweise darauf, welche Zelle wie oft beschrieben wurde bzw. welche Zelle nicht mehr nutzbar ist. Abhängig von der Qualität der Speicherzellen können dadurch nach außen statische logische Speicherblöcke intern durch unterschiedliche physikalische Speicherblöcke repräsentiert sein.

Das Speichermanagement kann z.B. über den Nutzungsgrad bzw. Abnutzungsgrad (Wear Level) einer Speicherzelle feststellen, ob eine Speicherzelle (bald) ausfällt und kann dann die Daten in eine andere physikalische Zelle kopieren, um Datenverlust zu vermeiden. Diese Überwachung der Speicherzellen wird bei Solid-State-Speichern ständig durchgeführt, um eine möglichst gleichmäßige Belastung der Speicherzellen des gesamten Solid-State-Speichers sicherzustellen. Da diese Daten zum einen von Varianzen während der Produktion und auch von der Nutzung des Solid-State-Speichers abhängig sind, sind die Verwaltungsdaten spezifisch für den jeweiligen Solid-State-Speicher und können damit für die Erzeugung von Zufallszahlen durch den hierin beschriebenen Zufallszahlengenerator genutzt werden.

Zusätzlich zu dem Abnutzungsgrad (Wear Level (WL)) können die Informationen den Zähler (Counter) der Lese-/Schreibzugriffe (CLS) für den gesamten Solid-State-Speicher bzw. für einen Speicherblock bzw. eine Speicherzelle, Informationen über die Verschiebung von logischen Speicherblöcken auf physikalische Speicherblöcke aufweisen. Diese Informationen können dann durch die Recheneinheit mittels einer Rechenfunktion, beispielsweise einer Hashfunktion in einen oder mehrere Startwerte (Seeds) S für die Erzeugungseinheit transformiert werden.

$$S = H(MSSD\{||WL\}\{||CLS\})$$

Hierbei bezeichnet {...} optionale Varianten, || bezeichnet die Konkatenation. MSSD bezeichnet die Verwaltungsdaten des Solid-State-Speichers.

Gemäß einer weiteren Ausführungsform ist die Recheneinheit dazu eingerichtet, den Startwert unter Verwendung einer kryptographischen Hashfunktion zu berechnen.

Als kryptographische Hashfunktionen können hier z.B. SHA-1, SHA256, SHA384, SHA 512, SHA-3, H-PRESENT-128 genutzt werden. Die kryptographische Hashfunktion kann beispielsweise auch als Keyed-Hashfunktion ausgebildet sein, z.B. HMAC-SHA1, HMAC-SHA256, HMAC-SHA384, HMAC-SHA512, HMAC-SHA3, AES-CBCMAC, AES-GMAC.

Gemäß einer weiteren Ausführungsform ist die Recheneinheit dazu eingerichtet, den Startwert unter Verwendung eines symmetrischen Algorithmus zu berechnen.

Der symmetrische Algorithmus kann beispielsweise als MAC-Algorithmus (Message Authentication Code) verwendet werden. Ein Beispiel hierfür ist AES-CBCMAC.

Gemäß einer weiteren Ausführungsform ist die Recheneinheit dazu eingerichtet, den Startwert basierend auf den Verwaltungsdaten und zumindest einer Eigenschaft des Solid-State-Speichers zu berechnen.

Gemäß dieser Ausführungsform können neben den Verwaltungsdaten des Solid-State-Speichers auch weitere Informationen zur Erzeugung eines Startwerts bzw. einer Seed miteinbezogen werden. Beispiele hierfür sind Zugriffszeiten (Z) für Speicherzellen. Diese können z.B. auch durch die unterschiedliche physikalische Repräsentation eines logischen Datenblocks variieren.

Demnach könnte der Startwert durch

$$S = H(MSSD\{||WL\}\{||CLS\}\{||Z\})$$

bestimmt werden.

Gemäß einer weiteren Ausführungsform ist die Recheneinheit dazu eingerichtet, den Startwert basierend auf den Verwaltungsdaten und einem Schlüssel zu berechnen, wobei der Schlüssel durch zumindest eine Eigenschaft des Solid-State-Speichers bestimmt ist.

Für die Hashfunktion oder den symmetrischen Algorithmus können als Schlüssel eine oder mehrere Eigenschaften des Solid-State-Speichers verwendet werden. Diese Eigenschaften können Eigenschaften sein, die bei der Herstellung des Solid-State-Speichers eingestellt oder vorgegeben werden. Eine solche Eigenschaft kann die Seriennummer des Solid-State-Speichers sein.

Gemäß einer weiteren Ausführungsform weist die zumindest eine Eigenschaft Zugriffszeiten auf Speicherzellen des Solid-State-Speichers und/oder gerätespezifische bzw. geräteindividuelle Parameter auf.

Die zumindest eine Eigenschaft können geräteindividuelle Parameter wie die Seriennummer des Gerätes, d.h. des Solid-State-Speichers, oder Daten wie Modell, Produktionsdaten etc. sein, die in die Zufallszahlenerzeugung als Eingabeparameter eingehen können. Diese Daten sind zwar nicht zufällig, es wird dadurch jedoch erreicht, dass mehrere Exemplare eines Gerätes unterschiedliche Zufallszahlen generieren, selbst wenn die Verwaltungsdaten initial, d.h. nach Fertigung bzw. Auslieferung, identisch oder zumindest ähnlich sein sollten. Gemäß einer weiteren Ausführungsform ist die Ermittlungseinheit dazu eingerichtet, die Verwaltungsdaten von einem Controller zu empfangen.

Der Controller kann irgendeine Art von Steuereinheit sein, die dazu fähig ist, die Verwaltung des Solid-State-Speichers durchzuführen oder auf die Verwaltungsdaten zuzugreifen.

Gemäß einer weiteren Ausführungsform ist der Controller intern in dem Solid-State-Speicher angeordnet und dazu eingerichtet, die Verwaltungsdaten zu verwalten.

Der Solid-State-Speicher kann den Controller aufweisen. Der Zufallszahlengenerator kann ebenfalls innerhalb des Solid-State-Speichers enthalten sein. In diesem Fall können die Recheneinheit, die Ermittlungseinheit, die Erzeugungseinheit und der Controller als eine einzige integrale Einheit ausgestaltet sein.

Gemäß einer weiteren Ausführungsform ist der Controller dazu eingerichtet, Zugriffe auf den Solid-State-Speicher basierend auf der erzeugten Zufallszahl zu steuern.

Die erzeugte Zufallszahl bzw. der Startwert bzw. die Rohdaten zur Bestimmung des Startwerts können intern durch den Solid-State-Speicher verwendet werden. Beispielsweise kann ein Zugriff auf die Daten in dem Solid-State-Speicher oder ein Schreibbestätigungsbefehl abhängig vom Zufallswert verzögert werden. In einer anderen Ausführungsform kann die erzeugte Zufallszahl über eine Schnittstelle nach außen bereitgestellt werden. Dadurch kann z.B. einem Computer, der auf den Solid-State-Speicher zugreift, ein Zufallswert bereitgestellt werden.

Gemäß einer weiteren Ausführungsform ist der Controller dazu eingerichtet, einen Schlüssel zur Verschlüsselung oder Entschlüsselung von auf dem Solid-State-Speicher gespeicherten Daten basierend auf der erzeugten Zufallszahl zu erzeugen. Der Solid-State-Speicher kann mittels des Controllers einen Verschlüsselungsschlüssel für eine Festplattenverschlüsselung bestimmen. Dieser Verschlüsselungsschlüssel kann durch die erzeugte Zufallszahl bestimmt werden.

Gemäß einer weiteren Ausführungsform weist der Solid-State-Speicher eine Solid-State-Disk, eine SD-Karte, eine USB-Speichereinrichtung und/oder einen Flash-Speicherbaustein auf.

Der Solid-State-Speicher kann für jede Art von Halbleiterbaustein-Speicher verwendet werden.

Gemäß einem weiteren Aspekt wird ein Verfahren zum Erzeugen von Zufallszahlen mittels eines Solid-State-Speichers vorgeschlagen. Das Verfahren weist die folgenden Schritte auf: Ermitteln von Verwaltungsdaten, die in dem Solid-State-Speicher zur Verwaltung des Solid-State-Speichers während des Betriebs gespeichert werden, Berechnen eines Startwerts basierend auf den ermittelten Verwaltungsdaten, und Erzeugen einer Zufallszahl basierend auf dem berechneten Startwert.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt ein schematisches Blockdiagramm eines Ausführungsbeispiels eines Zufallszahlengenerators;

Fig. 2 zeigt ein schematisches Ablaufdiagramm eines ersten Ausführungsbeispiels eines Verfahrens zum Erzeugen eines Schlüssels; und

Fig. 3 zeigt ein schematisches Ablaufdiagramm eines zweiten Ausführungsbeispiels eines Verfahrens zum Erzeugen eines Schlüssels.

In den Figuren sind gleiche oder funktionsgleiche Elemente mit denselben Bezugszeichen versehen worden, sofern nichts anderes angegeben ist.

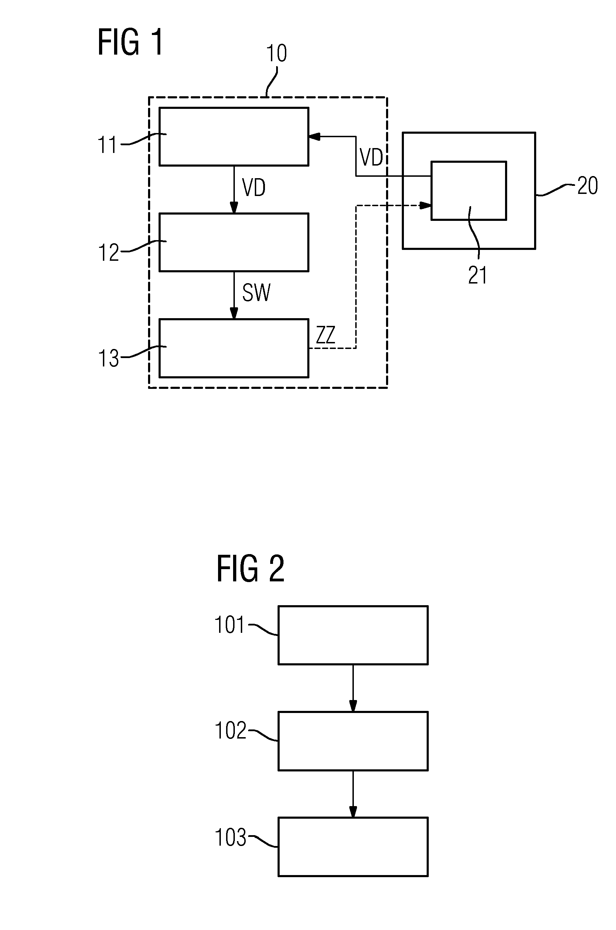

Fig. 1 zeigt ein Ausführungsbeispiel eines Zufallszahlengenerators 10.

Der Zufallszahlengenerator 10 weist eine Ermittlungseinheit 11, eine Recheneinheit 12 und eine Erzeugungseinheit 13 auf. Die Ermittlungseinheit 11 ist dazu eingerichtet, Verwaltungsdaten VD zu ermitteln. Die Verwaltungsdaten VD werden in einem Solid-State-Speicher 20 zur Verwaltung des Solid-State-Speichers 20 gespeichert. Während der Lebensdauer des Solid-State-Speichers 20 werden fortlaufend Verwaltungsdaten VD erzeugt und gespeichert. Diese enthalten unter anderem Informationen über den aktuellen Zustand der einzelnen Speicherzellen bzw. Speicherbereiche des Solid-State-Speichers 20 sowie Tabellen, welche physikalischen Speicherzellen nicht mehr nutzbar sind.

Die Ermittlungseinheit 11 kann diese Verwaltungsdaten beispielsweise von einem Controller 21 des Solid-State-Speichers 20 empfangen. In einer anderen Variante, nicht dargestellt, könnte die Ermittlungseinheit 11 Verwaltungsdaten VD eigenständig ermitteln. Sie könnte diese z.B. direkt aus einem Speicherbereich auslesen, der zur Speicherung der Verwaltungsdaten VD vorgesehen ist.

Die Recheneinheit 12 erhält die ermittelten Verwaltungsdaten VD von der Ermittlungseinheit 11. Die Recheneinheit 12 berechnet basierend auf den ermittelten Verwaltungsdaten VD einen Startwert SW.

Im Anschluss daran erzeugt eine Erzeugungseinheit 13 basierend auf diesem Startwert SW eine Zufallszahl ZZ. Hierbei kann die Erzeugungseinheit 13 basierend auf dem Startwert SW initialisiert werden. Dazu kann z.B. ein Pseudozufallszahlengenerator verwendet werden.

Die Zufallszahl ZZ kann an den Controller 21 weitergeleitet werden. Der Controller 21 kann die Zufallszahl ZZ verwenden, um Speicherbereiche des Solid-State-Speichers 20 zu verschlüsseln bzw. zu entschlüsseln, oder kann die Zufallszahl ZZ an externe Vorrichtungen weiterleiten.

Obwohl der Zufallszahlengenerator 10 in Fig. 1 als separate Vorrichtung gezeigt ist, kann der Zufallszahlengenerator 10 auch in dem Solid-State-Speicher 20 angeordnet sein.

Fig. 2 zeigt ein erstes Ausführungsbeispiel eines Verfahrens zum Erzeugen von Zufallszahlen ZZ mittels eines Solid-State-Speichers 20.

In einem ersten Schritt 101 werden Verwaltungsdaten VD ermittelt, die in dem Solid-State-Speicher 20 zur Verwaltung des Solid-State-Speichers 20 während des Betriebs gespeichert werden.

In einem zweiten Schritt 102 wird ein Startwert SW basierend auf den ermittelten Verwaltungsdaten VD berechnet.

Anschließend wird in einem dritten Schritt 103 eine Zufallszahl ZZ basierend auf dem berechneten Startwert SW erzeugt.

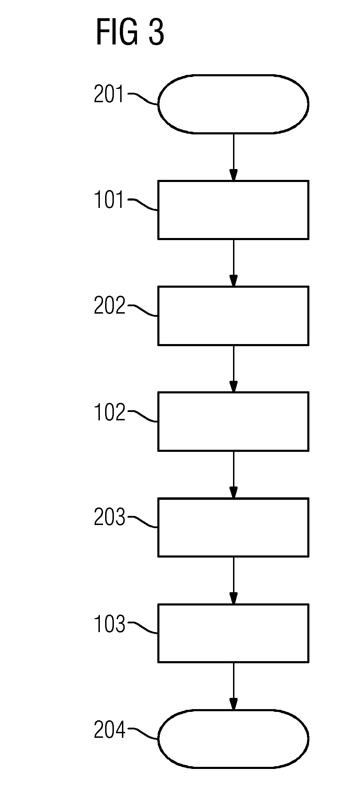

Fig. 3 zeigt ein zweites Ausführungsbeispiel eines Verfahrens zum Erzeugen von Zufallszahlen ZZ mittels eines Solid-State-Speichers 20.

Das in Fig. 3 gezeigte Verfahren weist zusätzlich zu den Schritten 101 bis 103 von Fig. 2 weitere Schritte auf.

In einem ersten Schritt 201 wird das Verfahren gestartet.

Anschließend werden in Schritt 101 die Verwaltungsdaten VD ermittelt.

In Schritt 202 werden die Verwaltungsdaten VD gefiltert, um die Informationen zu erhalten, die im weiteren Verfahren für die Berechnung des Startwerts SW verwendet werden sollen. Zu diesen Informationen zählen beispielsweise der Abnutzungslevel oder Speicherblockverschiebungen.

In Schritt 102 wird der Startwert SW basierend auf den (gefilterten) Verwaltungsdaten VD berechnet. Hierzu kann eine Einwegfunktion verwendet werden.

In Schritt 203 wird die Erzeugungseinheit 13 in Abhängigkeit von dem berechneten Startwert SW initialisiert.

Anschließend wird in Schritt 103 die Zufallszahl ZZ berechnet und in Schritt 204 das Verfahren beendet.

Obwohl die vorliegende Erfindung anhand von Ausführungsbeispielen beschrieben wurde, ist sie vielfältig modifizierbar.

**Patentansprüche**

1. Zufallszahlengenerator (10) zum Erzeugen von Zufallszahlen (ZZ) mittels eines Solid-State-Speichers (20), mit:

    einer Ermittlungseinheit (11) zum Ermitteln von Verwaltungsdaten (VD), die in dem Solid-State-Speicher (20) zur Verwaltung des Solid-State-Speichers (20) während des Betriebs gespeichert werden,
    einer Recheneinheit (12) zum Berechnen eines Startwerts (SW) basierend auf den ermittelten Verwaltungsdaten (VD), und
    einer Erzeugungseinheit (13) zum Erzeugen einer Zufallszahl (ZZ) basierend auf dem berechneten Startwert (SW).

2. Zufallszahlengenerator nach Anspruch 1,
    **dadurch gekennzeichnet,**
    **dass** die Recheneinheit (12) dazu eingerichtet ist, die Erzeugungseinheit (13) basierend auf dem berechneten Startwert (SW) zu initialisieren.

3. Zufallszahlengenerator nach Anspruch 1 oder 2,
    **dadurch gekennzeichnet,**

dass die Verwaltungsdaten (VD) Informationen in Bezug auf Speicherbereiche des Solid-State-Speichers (20) aufweisen.

4. Zufallszahlengenerator nach Anspruch 3,
   **dadurch gekennzeichnet,**
   dass die Informationen einen Abnutzungsgrad, einen Zähler von Lese- und/oder Schreibzugriffen und/oder Informationen über eine Verschiebung von logischen Speicherblöcken auf physikalische Speicherblöcke aufweisen.

5. Zufallszahlengenerator nach einem der Ansprüche 1 - 4,
   **dadurch gekennzeichnet,**
   dass die Recheneinheit (12) dazu eingerichtet ist, den Startwert (SW) unter Verwendung einer kryptographischen Hashfunktion zu berechnen.

6. Zufallszahlengenerator nach einem der Ansprüche 1 - 5,
   **dadurch gekennzeichnet,**
   dass die Recheneinheit (12) dazu eingerichtet ist, den Startwert (SW) unter Verwendung eines symmetrischen Algorithmus zu berechnen.

7. Zufallszahlengenerator nach einem der Ansprüche 1 - 6,
   **dadurch gekennzeichnet,**
   dass die Recheneinheit (12) dazu eingerichtet ist, den Startwert (SW) basierend auf den Verwaltungsdaten (VD) und zumindest einer Eigenschaft des Solid-State-Speichers (20) zu berechnen.

8. Zufallszahlengenerator nach einem der Ansprüche 1 - 7,
   **dadurch gekennzeichnet,**
   dass die Recheneinheit (12) dazu eingerichtet ist, den Startwert (SW) basierend auf den Verwaltungsdaten (VD) und einem Schlüssel zu berechnen, wobei der Schlüssel durch zumindest eine Eigenschaft des Solid-State-Speichers (20) bestimmt ist.

9. Zufallszahlengenerator nach Anspruch 7 oder 8,
   **dadurch gekennzeichnet,**
   dass die zumindest eine Eigenschaft Zugriffszeiten auf Speicherzellen des Solid-State-Speichers (20) und/oder gerätespezifische Parameter aufweist.

10. Zufallszahlengenerator nach einem der Ansprüche 1 - 9,
    **dadurch gekennzeichnet,**
    dass die Ermittlungseinheit (11) dazu eingerichtet ist, die Verwaltungsdaten (VD) von einem Controller (21) zu empfangen.

11. Zufallszahlengenerator nach Anspruch 10,
    **dadurch gekennzeichnet,**
    dass der Controller (21) intern in dem Solid-State-Speicher (20) angeordnet ist und dazu eingerichtet ist, die Verwaltungsdaten (VD) zu verwalten.

12. Zufallszahlengenerator nach Anspruch 11,
    **dadurch gekennzeichnet,**
    dass der Controller (21) dazu eingerichtet ist, Zugriffe auf den Solid-State-Speicher (20) basierend auf der erzeugten Zufallszahl (ZZ) zu steuern.

13. Zufallszahlengenerator nach Anspruch 11 oder 12,
    **dadurch gekennzeichnet,**
    dass der Controller (21) dazu eingerichtet ist, einen Schlüssel zur Verschlüsselung oder Entschlüsselung von auf dem Solid-State-Speicher (20) gespeicherten Daten basierend auf der erzeugten Zufallszahl (ZZ) zu erzeugen.

14. Zufallszahlengenerator nach einem der Ansprüche 1 - 13,
    **dadurch gekennzeichnet,**
    dass der Solid-State-Speicher (20) eine Solid-State-Disk, eine SD-Karte, eine USB-Speichereinrichtung und/oder einen Flash-Speicherbaustein aufweist.

**15.** Verfahren zum Erzeugen von Zufallszahlen (ZZ) mittels eines Solid-State-Speichers (20), mit:

Ermitteln (101) von Verwaltungsdaten (VD), die in dem Solid-State-Speicher (20) zur Verwaltung des Solid-State-Speichers (20) während des Betriebs gespeichert werden,
Berechnen (102) eines Startwerts (SW) basierend auf den ermittelten Verwaltungsdaten (VD), und
Erzeugen (103) einer Zufallszahl (ZZ) basierend auf dem berechneten Startwert (SW).

**Claims**

**1.** Random number generator (10) for generating random numbers (ZZ) using a solid-state memory (20), having:

a determination unit (11) for determining management data (VD) which are stored in the solid-state memory (20) for managing the solid-state memory (20) during operation,
a computing unit (12) for calculating a starting value (SW) on the basis of the determined management data (VD), and
a generation unit (13) for generating a random number (ZZ) on the basis of the calculated starting value (SW).

**2.** Random number generator according to Claim 1,
**characterized in that**
the computing unit (12) is set up to initialize the generation unit (13) on the basis of the calculated starting value (SW).

**3.** Random number generator according to Claim 1 or 2,
**characterized in that**
the management data (VD) have information relating to memory areas of the solid-state memory (20).

**4.** Random number generator according to Claim 3,
**characterized in that**
the information has a degree of wear, a counter of read and/or write access operations and/or information relating to a shift of logical memory blocks to physical memory blocks.

**5.** Random number generator according to one of Claims 1-4,
**characterized in that**
the computing unit (12) is set up to calculate the starting value (SW) using a cryptographic hash function.

**6.** Random number generator according to one of Claims 1-5,
**characterized in that**
the computing unit (12) is set up to calculate the starting value (SW) using a symmetrical algorithm.

**7.** Random number generator according to one of Claims 1-6,
**characterized in that**
the computing unit (12) is set up to calculate the starting value (SW) on the basis of the management data (VD) and at least one property of the solid-state memory (20).

**8.** Random number generator according to one of Claims 1-7,
**characterized in that**
the computing unit (12) is set up to calculate the starting value (SW) on the basis of the management data (VD) and a key, the key being determined by at least one property of the solid-state memory (20).

**9.** Random number generator according to Claim 7 or 8,
**characterized in that**
the at least one property has access times to memory cells of the solid-state memory (20) and/or device-specific parameters.

**10.** Random number generator according to one of Claims 1-9,
**characterized in that**
the determination unit (11) is set up to receive the management data (VD) from a controller (21).

**11.** Random number generator according to Claim 10,
**characterized in that**
the controller (21) is arranged internally in the solid-state memory (20) and is set up to manage the management data (VD).

**12.** Random number generator according to Claim 11,
**characterized in that**
the controller (21) is set up to control access to the solid-state memory (20) on the basis of the generated random number (ZZ).

**13.** Random number generator according to Claim 11 or 12,
**characterized in that**
the controller (21) is set up to generate a key for encrypting or decrypting data stored in the solid-state memory (20) on the basis of the generated random number (ZZ).

**14.** Random number generator according to one of Claims 1-13,
**characterized in that**
the solid-state memory (20) has a solid-state disk, an SD card, a USB storage device and/or a flash memory module.

**15.** Method for generating random numbers (ZZ) using a solid-state memory (20), comprising:

determining (101) management data (VD) which are stored in the solid-state memory (20) for managing the solid-state memory (20) during operation,
calculating (102) a starting value (SW) on the basis of the determined management data (VD), and
generating (103) a random number (ZZ) on the basis of the calculated starting value (SW).

**Revendications**

**1.** Générateur de nombres aléatoires (10) destiné à générer des nombres aléatoires (ZZ) au moyen d'une mémoire à semi-conducteurs (20), avec :

une unité de détermination (11) destinée à déterminer des données de gestion (VD) qui sont mémorisées dans la mémoire à semi-conducteurs (20) en vue d'une gestion de la mémoire à semi-conducteurs (20) pendant le fonctionnement,
une unité de calcul (12) destinée à calculer une valeur de départ (SW) en se basant sur les données de gestion (VD) déterminées, et
une unité de production (13) destinée à produire un nombre aléatoire (ZZ) en se basant sur la valeur de départ (SW) calculée.

**2.** Générateur de nombres aléatoires selon la revendication 1,
**caractérisé en ce que**
l'unité de calcul (12) est réglée pour initialiser l'unité de production (13) en se basant sur la valeur de départ (SW) calculée.

**3.** Générateur de nombres aléatoires selon la revendication 1 ou 2,
**caractérisé en ce que**
les données de gestion (VD) présentent des informations liées à des zones de mémoire de la mémoire à semi-conducteurs (20).

**4.** Générateur de nombres aléatoires selon la revendication 3,
**caractérisé en ce que**,
les informations présentent un degré d'usure, un compteur d'accès de lecture et/ou d'écriture et/ou des informations concernant un décalage de blocs de mémoire logique sur des blocs de mémoire physique.

**5.** Générateur de nombres aléatoires selon l'une quelconque des revendications 1 à 4,
**caractérisé en ce que**,
l'unité de calcul (12) est réglée pour calculer la valeur de départ (SW) en utilisant une fonction de hachage cryptographique.

6. Générateur de nombres aléatoires selon l'une quelconque des revendications 1 à 5,
**caractérisé en ce que**,
l'unité de calcul (12) est réglée pour calculer la valeur de départ (SW) en utilisant un algorithme symétrique.

7. Générateur de nombres aléatoires selon l'une quelconque des revendications 1 à 6,
**caractérisé en ce que**,
l'unité de calcul (12) est réglée pour calculer la valeur de départ (SW) en se basant sur les données de gestion (VD) et sur au moins une propriété de la mémoire à semi-conducteurs (20).

8. Générateur de nombres aléatoires selon l'une quelconque des revendications 1 à 7,
**caractérisé en ce que**,
l'unité de calcul (12) est en outre réglée pour calculer la valeur de départ (SW) en se basant sur les données de gestion (VD) et sur une clé, ladite clé étant définie grâce à au moins une propriété de la mémoire à semi-conducteurs (20).

9. Générateur de nombres aléatoires selon la revendication 7 ou 8,
**caractérisé en ce que**,
la au moins une propriété présente des temps d'accès à des cellules de mémoire de la mémoire à semi-conducteurs (20) et/ou des paramètres spécifiques aux appareils.

10. Générateur de nombres aléatoires selon l'une quelconque des revendications 1 à 9,
**caractérisé en ce que**,
l'unité de détermination (11) est réglée pour recevoir les données de gestion (VD) en provenance d'un contrôleur (21).

11. Générateur de nombres aléatoires selon la revendication 10,
**caractérisé en ce que**,
le contrôleur (21) est agencé de manière interne dans la mémoire à semi-conducteurs (20) et est en outre réglé pour gérer les données de gestion (VD).

12. Générateur de nombres aléatoires selon la revendication 11,
**caractérisé en ce que**,
le contrôleur (21) est en outre réglé pour commander des accès à la mémoire à semi-conducteurs (20) en se basant sur les nombres aléatoires (ZZ) produits.

13. Générateur de nombres aléatoires selon la revendication 11 ou 12,
**caractérisé en ce que**,
le contrôleur (21) est en outre conçu pour produire une clé destinée au verrouillage ou au déverrouillage de données mémorisées dans la mémoire à semi-conducteurs (20) en se basant sur le nombre aléatoire (ZZ) produit.

14. Générateur de nombres aléatoires selon l'une quelconque des revendications 1 à 13,
**caractérisé en ce que**,
la mémoire à semi-conducteurs (20) est un disque statique à semi-conducteurs, une carte SD, un appareil de mémorisation USB et/ou un élément de mémoire flash.

15. Procédé de production de nombres aléatoires (ZZ) au moyen d'une mémoire à semi-conducteurs (20), avec :

   détermination (101) de données de gestion (VD) qui sont mémorisées pendant le fonctionnement dans la mémoire à semi-conducteurs (20) en vue d'une gestion de la mémoire à semi-conducteurs (20),
   calcul (102) d'une valeur de départ (SW) en se basant sur les données de gestion (VD) déterminées, et
   production (103) d'un nombre aléatoire (ZZ) en se basant sur la valeur de départ (SW) calculée.

FIG 1

FIG 2

# FIG 3

201

101

202

102

203

103

204

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130124591 A1
- US 20090161246 A1
- WO 2012136763 A2